# EUROPÄISCHE PATENTSCHRIFT

(11) **EP 4 115 510 B1**
(45) Veröffentlichungstag und Bekanntmachung des Hinweises auf die Patenterteilung: **22.04.2026**
(21) Anmeldenummer: 21712400.7
(22) Anmeldetag: 05.03.2021
(51) Int. Cl.: H02M 1/00, H02M 7/5387, H02M 7/797, H02P 29/032, H02M 7/5381, H02P 29/02

(54) **UMRICHTERANORDNUNG UND VERFAHREN ZUM BETRIEB EINER UMRICHTERANORDNUNG**
INVERTER ARRANGEMENT AND METHOD OF OPERATING A INVERTER ARRANGEMENT
DISPOSITION D'INVERTER ET PROCEDE DE FONCTIONNEMENT D'UN DISPOSITIF D'INVERTER

(30) Priorität: 05.03.2020 AT 501802020
(43) Veröffentlichungstag der Anmeldung: 11.01.2023
(73) Patentinhaber: AVL List GmbH, 8020 Graz (AT)
(72) Erfinder: REISINGER, Erwin, 8073 Feldkirchen b. Graz (AT); SCHMIDT, Martin, 63225 Langen (DE)
(74) Vertreter: Hartinger, Mario
(86) Internationale Anmeldenummer: PCT/AT2021/060077
(87) Internationale Veröffentlichungsnummer: WO 2021/174278

(56) Entgegenhaltungen:
- EP-A1- 1 931 586
- EP-A2- 2 544 332

## Beschreibung

Die Erfindung betrifft eine Umrichteranordnung und ein Verfahren zum Betrieb einer Umrichteranordnung.

Umrichteranordnungen mit mehreren Umrichtern sind für eine Vielzahl von Anwendungen auf dem Gebiet der Elektrotechnik bekannt. Insbesondere Antriebe von Elektrofahrzeugen und Hybridfahrzeugen verfügen zur Bereitstellung der Antriebsleistung und zur Ansteuerung der elektrischen Maschinen Umrichteranordnungen mit mehreren Umrichtern, um die von einer Batterie zur Verfügung gestellte Gleichspannung in geeignete Wechselspannungen oder Gleichspannungen der anzutreibenden elektrischen Maschine und anderer Verbraucher im Fahrzeug umzuformen.

Auch elektrisch betriebene Prüfstände umfassen regelmäßig Umrichteranordnungen mit mehreren Umrichtern, sei es nun für die Prüfung der Antriebsstränge von Elektrofahrzeugen, Hybridfahrzeugen, herkömmlichen Fahrzeugen mit Verbrennungsmotor, der mechanischen Komponenten wie dem Getriebe, oder den Batteriespeichern selbst. Gerade die Prüfung der Batteriespeicher erfolgt oft parallel, wobei mehrere Batteriezellen, Batteriemodule oder Batteriepacks gleichzeitig mit parallel angeordneten Umrichtern geprüft werden.

Aus dem Stand der Technik sind elektronische Steuereinheiten für derartige Umrichteranordnungen bekannt. Diese sind in der Regel dazu ausgeführt, auf Grundlage einer geforderten Zielgröße die einzelnen Umrichter in einer bestimmten Abfolge zu aktivieren, wobei dies auch die gleichzeitige Aktivierung sämtlicher Umrichter umfassen kann. Eine solche Steuerung ist beispielsweise aus dem Dokument EP 1 931 586 A1 bekannt. Beispielsweise kann in einem Elektrofahrzeug eine Maximalbeschleunigung (Kickdown) oder eine Vollbremsung gefordert werden, was eine gleichzeitige Aktivierung mehrerer Umrichter des Fahrzeugs zur Folge hat. Auch in einem Prüfstand für einen Antriebsstrang mit mehreren elektrischen Maschinen oder für ein mehrzelliges Batteriemodul kann die vorgegebene Prüfmethodik (der sogenannte Prüflauf) die gleichzeitige Aktivierung mehrerer Umrichter der Umrichteranordnung fordern.

Dabei ergibt sich die Problematik, dass die Energieversorgung derartiger Umrichteranordnungen in der Regel limitiert ist, sei es in Form der in einem Elektrofahrzeug verbauten Batterie, oder in Form des an einem Prüfstand in der Regel zur Verfügung gestellten Zentralnetzes in Form eines Wechselstromnetzes oder eines Gleichspannungszwischenkreises. Insbesondere Gleichspannungszwischenkreise sollen vor Ort durch möglichst kompakte Bauteile (sogenannte Netzgleichrichter) herstellbar sein, was wiederum den maximalen Energiefluss bei der Abarbeitung von Prüfläufen begrenzt. Die gleichzeitige Aktivierung mehrerer Umrichter kann auch zu einer Überlastung des Zentralnetzes führen, sowohl in Form einer übermäßigen Leistungsaufnahme aus der Energieversorgung (beispielsweise bei einem Kickdown), als auch im Fall einer übermäßigen Leistungsabgabe in die Energieversorgung (beispielsweise bei einer Vollbremsung).

Die Aufgabe der Erfindung besteht unter anderem darin, eine Umrichteranordnung und ein Verfahren zur Ansteuerung einer Umrichteranordnung zu schaffen, welches eine Überlastung der Energieversorgung vermeidet und eine möglichst homogene Lastverteilung der Umrichter ermöglicht, um die Energieversorgung aus dem Zentralnetz möglichst wenig oder am besten gar nicht zu belasten.

Diese und andere Aufgaben werden erfindungsgemäß mit einer Umrichteranordnung und einem Verfahren zur Ansteuerung einer Umrichteranordnung nach einem der unabhängigen Patentansprüche gelöst.

Eine erfindungsgemäße Umrichteranordnung umfasst zumindest zwei Umrichter und eine mit den Umrichtern verbundene Steuereinheit. Die Steuereinheit kann als elektronische Datenverarbeitungseinheit, insbesondere als Computer, Mikrocontroller, Mikroprozessor oder dergleichen ausgeführt sein und kann eine elektronische Datenverarbeitungseinheit und eine elektronische Speichereinheit umfassen.

Die Steuereinheit ist erfindungsgemäß dazu ausgeführt, kontinuierlich oder in diskreten Zeitintervallen Messdaten der Umrichter zu empfangen, insbesondere Strom- und Spannungsmesswerte oder Leistungsdaten, und Steuerdaten an die Umrichter zu übermitteln. Dazu kann die Steuereinheit über eine Schnittstelleneinheit mit einem Datenbus verbunden sein, der zur bidirektionalen Kommunikation mit den Umrichtern ausgebildet ist, beispielsweise eine USB-Schnittstelle oder dergleichen.

Die Steuereinheit ist ferner dazu ausgeführt, den Umrichtern der Umrichteranordnung ihren erlaubten elektrischen Leistungsbereich zu übermitteln. Dabei kann es sich um ein Leistungsbereich handeln, das insbesondere durch einen minimalen Leistungswert Pₘᵢₙ und/oder einen maximalen Leistungswert Pₘₐₓ gebildet sein kann. Im Betrieb empfängt die Steuereinheit also Messdaten von den Umrichtern oder anderen elektrischen Komponenten und liefert an jeden Umrichter der Umrichteranordnung einen für ihn zulässigen Leistungsbereich. Die Erfindung ist dabei nicht auf positive Leistungen (Leistungsaufnahme, motorischer Betrieb) beschränkt, sondern umfasst auch negative Leistungen (Leistungsabgabe, generatorischer Betrieb).

Ferner kann die Steuereinheit auch dazu ausgeführt sein, aktuelle Leistungssollwerte an die Umrichter zu übermitteln. Beispielsweise kann es sich um die in einem Prüflauf gewünschten Zustände eines Prüfstands handeln, oder um die Anforderungen des Fahrers eines Fahrzeugs im Betrieb. Die Steuereinheit stellt dabei sicher, dass die Leistungssollwerte innerhalb des für den jeweiligen Umrichter zulässigen Leistungsbereichs liegen.

Erfindungsgemäß ist vorgesehen, dass die Steuereinheit dazu ausgeführt ist, die aktuelle Leistungsbilanz der Umrichter zu bestimmen oder von den Umrichtern über den Datenbus entgegenzunehmen. Der Begriff der aktuellen Leistungsbilanz bezeichnet dabei die aktuelle Leistungsaufnahme oder Leistungsabgabe der Umrichter. Dabei ist zu beachten, dass erfindungsgemäße Umrichter einen bidirektionalen Betrieb ermöglichen können, das heißt, sowohl Leistung aufnehmen, als auch Leistung abgeben können. Insbesondere kann es sich bei den Umrichtern um sogenannte Active-Front-End-Umrichter handeln. Als Active-Front-End-Umrichter wird in diesem Zusammenhang ein bidirektionaler Umrichter bezeichnet, der elektrische Energie in beide Richtungen übertragen kann, beispielsweise ein aktiv geschalteter Brückengleichrichter oder Brückenwechselrichter.

Die Steuereinheit ist ferner dazu ausgebildet, aus den entgegengenommenen Leistungsbilanzen der einzelnen Umrichter die Leistungsbilanz der gesamten Umrichteranordnung zu berechnen. Dabei handelt es sich in der Regel um die Summe der Leistungsbilanzen der einzelnen Umrichter. Alternativ kann auch vorgesehen sein, dass die Steuereinheit mit übergeordneten Spannungs- und Stromsensoren verbunden ist, welche die Berechnung der Leistungsbilanz der gesamten Umrichteranordnung ermöglichen.

Die Steuereinheit ist ferner dazu ausgebildet, den zulässigen elektrischen Leistungsbereich der Umrichter derart abzuändern, dass die Leistungsbilanz der gesamten Umrichteranordnung einen vorgegebenen Bereich nicht verlässt. Die Steuereinheit ist weiters dazu ausgebildet, den zulässigen elektrischen Leistungsbereich der Umrichter abzuändern, wenn die Spannung eines die Umrichter speisenden Gleichspannungszwischenkreises unter einen vorgegebenen Schwellwert fällt oder einen vorgegebenen Schwellwert übersteigt. Die Steuereinheit sorgt dann also dafür, dass die Gleichspannung des Gleichspannungszwischenkreises innerhalb eines vorgegebenen Bereichs bleibt. Überschreitet die Gleichspannung den Bereich, so wird der zulässige Leistungsbereich einzelner oder aller Umrichter reduziert; unterschreitet die Gleichspannung den Bereich, so wird die zulässige Leistungsaufnahme einzelner oder aller Umrichter reduziert. Eine übermäßige Belastung des Gleichspannungszwischenkreises kann dadurch verhindert werden. Sofern dies die Änderung von in Prüfläufen definierten Leistungswerten erfordert, so ist eine Änderung der Prüfläufe immer noch vorteilhafter als ein unvorhergesehener Abbruch des Prüflaufs wegen Überlastung des Zwischenkreises.

Dabei können sich die Leistungsbereiche motorisch und generatorisch betriebener Umrichter gegenseitig aufheben, sodass die gesamte Umrichteranordnung in einem kleinen Leistungsbereich betrieben wird, obwohl die einzelnen Umrichter jeweils eine hohe Leistung aufnehmen bzw. abgeben.

Zur Bestimmung der aktuellen Leistungsbilanz der Umrichter kann die Steuereinheit mit zumindest einem Spannungssensor zur Messung der Eingangsspannung der Umrichter und mit Stromsensoren zur Messung der Eingangsströme der Umrichter verbunden sein.

Insbesondere kann vorgesehen sein, dass die Umrichter von einem Gleichspannungszwischenkreis gespeist sind und die Steuereinheit mit einem Spannungssensor zur Messung der Spannung am Gleichspannungszwischenkreis verbunden ist. Dadurch kann die Steuereinheit die jeweilige aktuelle Leistungsaufnahme oder Leistungsabgabe jedes Umrichters einfach berechnen.

Die Steuereinheit kann jedoch zur Bestimmung der aktuellen Leistungsbilanz der Umrichter auch mit Spannungssensoren zur Messung der Ausgangsspannung der Umrichter und mit Stromsensoren zur Messung der Ausgangsströme der Umrichter verbunden sein. Dadurch erfolgt eine Bestimmung der Leistungsbilanzen der Umrichter ausgangsseitig. Es kann sich um Wechselspannungs- bzw. Wechselstromsensoren handeln.

Die Umrichter können jedoch auch mit internen oder externen Spannungssensoren zur Messung ihrer Ausgangsspannung und mit internen oder externen Stromsensoren zur Messung ihrer Ausgangsströme verbunden sein, und zur Übermittlung der Messwerte an die Steuereinheit ausgebildet sein. In diesen Fällen liefern die Umrichter ihre aktuelle Leistungsbilanz bzw. ihre aktuellen Strom- und Spannungswerte selbst an die Steuereinheit.

Ferner kann vorgesehen sein, dass eine mit der Steuereinheit verbundene Entladungsvorrichtung zur Reduktion der Spannung an einem Gleichspannungszwischenkreis vorgesehen ist, und die Steuereinheit dazu ausgeführt ist, die Entladungsvorrichtung zu aktivieren, wenn die Spannung am Gleichspannungszwischenkreises einen vorgegebenen Schwellwert übersteigt. Bei der Entladungsvorrichtung kann es sich beispielsweise um einen Heizwiderstand handeln, der dazu ausgebildet ist, die Spannung am Gleichspannungszwischenkreis abzubauen. Dadurch kann auf besonders schnellem Wege eine Reduktion der Spannung am Gleichspannungszwischenkreis erreicht werden, beispielsweise im Fall einer Notbremsung eines Fahrzeugs, oder wenn in einem Batterieprüfstand sämtliche Batterien gleichzeitig entladen.

Durch die erfindungsgemäße Vorrichtung wird also erreicht, dass der Gleichspannungszwischenkreis möglichst wenig belastet wird. Insbesondere kann eine "back-to-back"-Anordnung der Umrichter vorgesehen sein, wobei eine Leistungsabgabe eines ersten Umrichters unmittelbar zur Versorgung eines zweiten Umrichters verwendet wird, sodass lediglich Energie zur Überwindung von Verlusten zur Verfügung gestellt werden muss. Insbesondere kann die Steuereinheit dazu ausgeführt sein, einen vorgegebenen Prüflauf derart abzuändern, dass zu jedem Zeitpunkt eines Prüflaufs die Leistungsbilanz der Umrichteranordnung einen vorgegebenen Bereich nicht verlässt.

Die Umrichter können als Active-Front-End-Umrichter mit bidirektionalem Leistungsfluss ausgebildet sein. Die Umrichter können insbesondere als Maschinenumrichter in einem Antriebsprüfstand oder als DC-DC-Konverter in einem Batterieprüfstand eingesetzt werden.

Weitere erfindungsgemäße Umrichteranordnungen können in hierarchischen Netzstrukturen zur Netzbalancierung eingesetzt werden. Erfindungsgemäß kann dabei vorgesehen sein, dass zumindest zwei der Umrichter als Netzumrichter, insbesondere AC-DC-Konverter, ausgebildet sind, die voneinander getrennte Subnetze, vorzugsweise in Form getrennter Gleichspannungszwischenkreise, aus einem Zentralnetz speisen. Dabei kann die Steuereinheit dazu ausgeführt sein, den zulässigen elektrischen Leistungsbereich der Umrichter derart abzuändern, dass die Leistungsbilanz des Zentralnetzes einen vorgegebenen Bereich nicht verlässt. Die Steuereinheit steuert in diesem Fall also die Leistungsverteilung vom Zentralnetz zu den einzelnen Subnetzen derart, dass die Leistungsbilanz des Zentralnetzes möglichst innerhalb eines bestimmten Leistungsbereiches bleibt.

Erfindungsgemäß kann in derartigen Netzstrukturen vorgesehen sein, dass zumindest zwei weitere Umrichter in zumindest einem der Subnetze angeordnet sind, wobei die Steuereinheit dazu ausgeführt ist, auch den zulässigen elektrischen Leistungsbereich dieser Umrichter derart abzuändern, dass die Leistungsbilanz jedes Subnetzes einen vorgegebenen Bereich nicht verlässt. Dies ermöglicht eine hierarchische Netzbalancierung; einerseits auf Ebene der Subnetze, andererseits auf Ebene des Zentralnetzes.

Die Erfindung betrifft ferner einen Prüfstand für vorzugsweise mehrere Prüflinge, beispielsweise für die Komponenten eines Antriebs oder für elektrische Energiespeicher wie Batterien, umfassend eine erfindungsgemäße Umrichteranordnung. Dabei kann insbesondere vorgesehen sein, dass ein Gleichspannungszwischenkreis zur Energieversorgung vorgesehen ist, und sämtliche Umrichter mit der Steuereinheit über einen bidirektionalen Datenbus verbunden sind.

Die Erfindung betrifft auch ein Verfahren zum Betrieb einer Umrichteranordnung mit zumindest zwei Umrichtern und einer mit den Umrichtern verbundenen Steuereinheit, umfassend die folgenden Schritte: In einem ersten Schritt, Übermittlung, durch die Steuereinheit, eines zulässigen elektrischen Leistungsbereichs an die Umrichter, insbesondere eines minimalen Leistungswerts Pₘᵢₙ und/oder eines maximalen Leistungswerts Pₘₐₓ. In einem weiteren Schritt, Empfangen oder Berechnen, durch die Steuereinheit, der aktuellen Leistungsbilanz der einzelnen Umrichter. In einem weiteren Schritt, Berechnen, durch die Steuereinheit, der Leistungsbilanz der gesamten Umrichteranordnung. In einem weiteren Schritt, Adaptieren, durch die Steuereinheit, des zulässigen elektrischen Leistungsbereichs der Umrichter derart, dass die Leistungsbilanz der gesamten Umrichteranordnung einen vorgegebenen Bereich nicht verlässt, wenn die Spannung eines die Umrichter speisenden Gleichspannungszwischenkreises unter einen vorgegebenen Schwellwert fällt oder einen vorgegebenen Schwellwert übersteigt.

Die Steuereinheit beaufschlagt die Umrichter auch laufend mit Sollwerten ihrer elektrischen Leistung. Dabei kann es sich um eine planmäßige Beaufschlagung, beispielsweise im Rahmen eines Prüflaufs, oder eine nicht planmäßige Beaufschlagung, beispielsweise als Reaktion auf einen Fahrerwunsch eines Fahrzeugs, handeln.

Die Steuereinheit kann zur Berechnung der aktuellen Leistungsbilanz der Umrichter die Eingangsspannung der Umrichter von zumindest einem Spannungssensor und die Eingangsströme der Umrichter von Stromsensoren entgegennehmen. Die Steuereinheit kann die Spannung eines Gleichspannungszwischenkreises von einem Spannungssensor entgegennehmen.

Die Steuereinheit kann die Ausgangsspannungen der Umrichter von Spannungssensoren und die Ausgangsströme der Umrichter von Stromsensoren entgegennehmen. Die Steuereinheit ändert den zulässigen elektrischen Leistungsbereich der Umrichter ab, wenn die Spannung eines die Umrichter speisenden Gleichspannungszwischenkreises, unter einen vorgegebenen Schwellwert fällt oder einen vorgegebenen Schwellwert übersteigt.

Die Steuereinheit kann eine mit der Steuereinheit verbundene Entladungsvorrichtung zur Reduktion der Spannung an einem Gleichspannungszwischenkreis aktivieren, wenn die Spannung am Gleichspannungszwischenkreises einen vorgegebenen Schwellwert übersteigt.

Die Steuereinheit kann auch den zulässigen elektrischen Leistungsbereich der Umrichter eines Zentralnetzes derart abändern, dass die Leistungsbilanz der Umrichter des Zentralnetzes einen vorgegebenen Bereich nicht verlässt, und den zulässigen elektrischen Leistungsbereich der Umrichter zumindest eines Subnetzes derart abändern, dass die Leistungsbilanz der Umrichter jedes Subnetzes einen vorgegebenen Bereich nicht verlässt.

Die Erfindung erstreckt sich ferner auch ein computerlesbares Speichermedium umfassend computerlesbare Anweisungen die eine elektronische Steuereinheit, beispielsweise einen Computer, einen Mikrocontroller oder einen Mikroprozessor, zur Ausführung eines erfindungsgemäßen Verfahrens veranlassen.

Weitere erfindungsgemäße Merkmale ergeben sich aus den Patentansprüchen, den Figuren und der nachfolgenden Figurenbeschreibung. Die Erfindung wird im Folgenden an Hand von nicht ausschließlichen Ausführungsbeispielen erläutert.
Fig. 1 zeigt ein schematisches Blockschaltbild der Topologie einer erfindungsgemäßen Umrichteranordnung in einem Prüfstand für Antriebe;
Fig. 2 zeigt ein schematisches Blockschaltbild der Topologie einer erfindungsgemäßen Umrichteranordnung in einem Prüfstand für Batterien (sog. Batterie-Cycler);
Fig. 3a-3b zeigen schematische Blockschaltbilder der Topologien erfindungsgemäßer Umrichteranordnungen in einer hierarchischen Netzstruktur mit zwei Subnetzen.

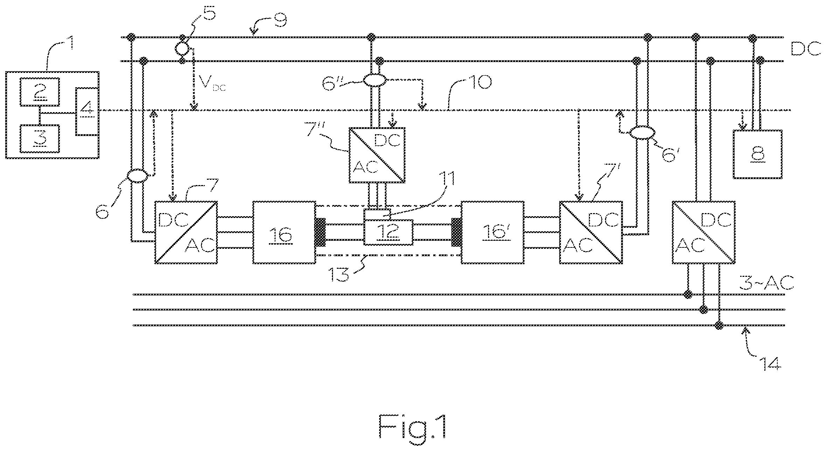

Fig. 1 zeigt ein schematisches Blockschaltbild der Topologie eines Ausführungsbeispiels einer erfindungsgemäßen Umrichteranordnung in einem Prüfstand für Antriebe. Der Prüfstand umfasst einen **Netzumrichter,** der ein am Prüfstand verfügbares Zentralnetz 14 (mehrphasige AC-Netzspannung) in eine DC-Gleichspannung in Höhe von etwa 820 V umwandelt. Diese DC-Gleichspannung wird als Zwischenkreisspannung (DC-Link) bezeichnet und steht am Prüfstand zur Versorgung des Prüflings zur Verfügung. Der Netzumrichter ist ein Gleichspannungswandler (AC-DC-Konverter) in Form eines geschalteten Active-Front-End Brückengleichrichters.

Der Prüfstand ist in diesem Ausführungsbeispiel zum Prüfen der elektrischen und mechanischen Komponenten eines Antriebsprüflings 13 mit einem Antriebsaggregat 11, beispielsweise einem Elektromotor, und einem Getriebe 12 ausgeführt. Bei dem zu prüfenden Antrieb kann es sich um den Antrieb eines Kraftfahrzeugs, insbesondere eines Elektrofahrzeugs oder eines Hybridfahrzeugs, handeln. In diesem Ausführungsbeispiel sind zwei elektrische Maschinen 16, 16' (Belastungsmaschinen, sogenannte Dynamometer) vorgesehen, die an die Welle des Antriebsprüflings 13 gekoppelt sind. Diese elektrischen Maschinen 16, 16' werden von zwei Umrichtern 7, 7' (Maschinenumrichter) versorgt, welche die Zwischenkreis-Gleichspannung V_{DC} in eine Wechselspannung umwandeln. Die Umrichter 7, 7' sind als Wechselspannungswandler (DC-AC-Konverter) ausgeführt, beispielsweise als geschaltete Active-Front-End Brückenwechselrichter.

Zusätzlich zum mechanischen Antriebsstrang des Antriebs 13 wird in diesem Ausführungsbeispiel auch das elektrische Antriebsaggregats 11 des Antriebsprüflings 13 geprüft.

Zu diesem Zweck umfasst der Prüfstand einen weiteren bidirektionalen Umrichter 7", der mit dem Zwischenkreis 9 verbunden ist und dem Antriebsaggregat 11 eine variable Wechselspannung zur Verfügung stellt. Je nach Betriebszustand nimmt das Antriebsaggregat 11 Leistung auf oder gibt Leistung an den Zwischenkreis ab.

In den Gleichspannungs-Eingangsleitungen der Umrichter 7, 7', 7" sind Stromsensoren 6, 6', 6" angeordnet, und im Gleichspannungs-Zwischenkreis 9 ist ein Spannungssensor 5 angeordnet. Diese Sensoren liefern kontinuierlich Messwerte der Spannung am Zwischenkreis 9 und der Eingangsströme der Umrichter 7, 7', 7" über einen Datenbus 10 an eine Steuereinheit 1. Die Umrichteranordnung umfasst in diesem Ausführungsbeispiel die drei Umrichter 7, 7', 7", nicht jedoch den Netzumrichter.

Ebenfalls über den Datenbus 10 ist die Steuereinheit 1 mit den Umrichtern 7, 7', 7" und mit einer Entladevorrichtung 8 verbunden. Diese Verbindungen dienen dazu, den Umrichtern einen zulässigen Leistungsbereich und gegebenenfalls auch einen Leistungs-Sollwert Pₛₒₗₗ vorzugeben, bzw. die Entladevorrichtung 8 zur Reduktion der Spannung am Zwischenkreis 9 zu aktivieren.

Die Steuereinheit 1 ist in diesem Ausführungsbeispiel als elektronischer Mikrocontroller mit einer zentralen Datenverarbeitungseinheit (CPU) 2, beispielsweise einem ARM Mikroprozessor oder einem ASIC ausgeführt. Die Datenverarbeitungseinheit 2 ist über einen Datenbus mit einer Speichereinheit 3 und einer Schnittstelleneinheit 4 verbunden. Bei der Speichereinheit 3 kann es sich um einen beliebigen maschinenlesbaren Datenspeicher handeln, beispielsweise nichtflüchtige Halbleiterspeicher oder flüchtige Halbleiterspeicher, ROM, EPROM, EEPROM, RAM, SRAM, Flash-Speicher und dergleichen.

Die Schnittstelleneinheit 4 kann auf Industriestandards wie USB, FireWire, Ethernet, USART, I2S und dergleichen basieren. Auch drahtlose Netzwerkprotokolle können vorgesehen sein, wie Wi-Fi, Bluetooth und dergleichen. Ausführungsformen geeigneter Steuereinheiten gehören zum notorischen Fachwissen des Fachmanns, sodass nicht jede Komponente der Steuereinheit 1 im Detail erklärt werden muss.

Im Betrieb misst die Steuereinheit 1 kontinuierlich die Spannung am Zwischenkreis 9 und die Ströme der Umrichter 7, 7', 7", und stellt den Umrichtern 7, 7', 7" jeweils Leistungs-Sollwerte und ihre zulässigen Leistungsbereiche zur Verfügung. Fällt die vom Gleichspannungssensor 5 gemessene Gleichspannung unter einen vorgegebenen Schwellwert, oder übersteigt diese Gleichspannung einen vorgegebenen Schwellwert, so adaptiert die Steuereinheit 1 den zulässigen Leistungsbereich derart, dass dem Spannungsabfall bzw. Spannungsanstieg entgegengewirkt wird.

Dadurch wird erreicht, dass sich die Spannung am Zwischenkreis 9 stets in einer bestimmten Bandbreite bewegt, sodass der Netzumrichter nur wenig belastet wird.

Im Idealfall adaptiert die Steuereinheit 1 die Leistungsflüsse der Umrichter 7, 7', 7" derart, dass vom Netzumrichter nur die Deckung der Verlustleistung erforderlich ist. Dies kann erreicht werden, wenn zumindest einer der Umrichter 7, 7', 7" Leistung in den Zwischenkreis 9 liefert, und zumindest einer der Umrichter 7, 7', 7" Leistung aus dem Zwischenkreis 9 bezieht. Die Steuereinheit 1 kann dazu ausgeführt sein, derartige "back-to-back" Betriebszustände aktiv herbeizuführen, auch unter Änderung gegebenenfalls vordefinierter Prüfmuster. Dadurch kann eine besonders kompakte Dimensionierung des Netzumrichters erreicht werden.

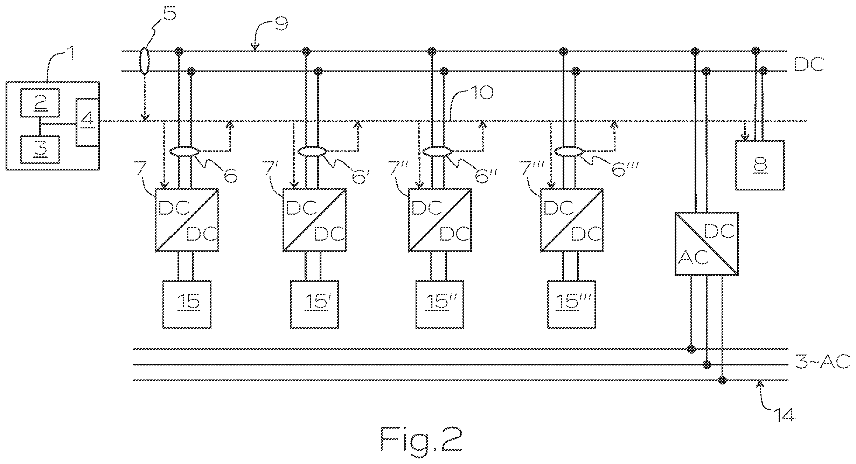

Fig. 2 zeigt ein schematisches Blockschaltbild der Topologie eines weiteren Ausführungsbeispiels eines erfindungsgemäßen Prüfstands für Batterien (sog. Batterie-Cycler). In diesem Ausführungsbeispiel sind vier von der Steuereinheit 1 angesteuerte Active-Front-End-Umrichter 7, 7', 7", 7‴ vorgesehen, die jeweils als geschaltete DC/DC-Wandler ausgeführt sind und eine Batterie 15, 15', 15", 15‴ laden oder entladen. Die Umrichteranordnung umfasst in diesem Ausführungsbeispiel die vier Umrichter 7, 7', 7", 7‴, nicht jedoch den Netzumrichter, der die Zwischenkreisspannung erzeugt.

Die Funktionsweise der Steuereinheit 1 ist ähnlich wie im Ausführungsbeispiel nach Fig. 1. Die Steuereinheit 1 adaptiert die zulässigen Leistungsbereiche der Umrichter 7, 7', 7", 7‴ derart, dass die Summe der Leistungen der Umrichter unter einem vorgegebenen Schwellwert liegt.

Im Fall dass die Spannung am Zwischenkreis 9 einen vorgegebenen Schwellwert übersteigt, aktiviert die Steuereinheit 1 eine Entladungseinheit 8, beispielsweise einen Heizwiderstand, um den Zwischenkreis zu entlasten. Im Fall dass die Spannung am Zwischenkreis 9 unter einen anderen Schwellwert fällt, reduziert die Steuereinheit 1 die Leistungsbereiche einzelner oder aller Umrichter, sodass sich die Spannung am Zwischenkreis 9 wieder erholt.

Statt der einzelnen Batterien 15, 15', 15", 15‴ können in nicht dargestellten Ausführungsbeispielen auch separate Batteriezellen oder Batteriemodule (Kombinationen von Batteriezellen) getestet werden.

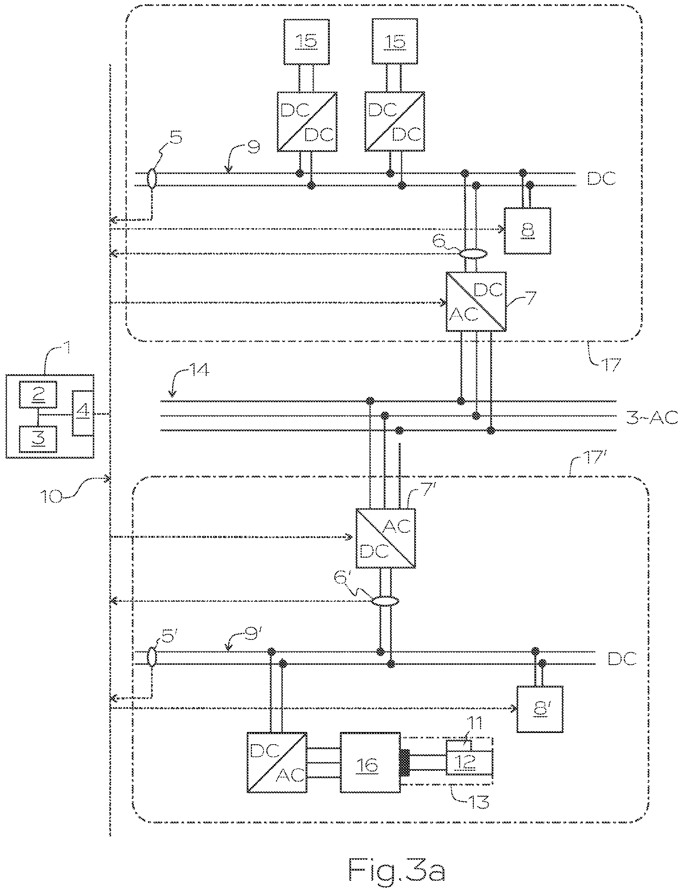

Fig. 3a-3b zeigen schematische Blockschaltbilder der Topologien erfindungsgemäßer Umrichteranordnungen in einer hierarchischen Netzstruktur mit zwei Subnetzen. In Fig. 3a sind zwei Subnetze 17, 17' vorgesehen, die von einem Zentralnetz 14 (3-phasiges Wechselstromnetz) über Umrichter 7, 7' gespeist werden. Die Umrichter 7, 7' sind in diesem Ausführungsbeispiel Netzumrichter, also Gleichrichter, die jeweils einen Gleichspannungszwischenkreis 9, 9' speisen. In den Gleichspannungszwischenkreisen 9, 9' sind Spannungssensoren 5, 5' angeordnet, die ihre Messwerte über den Datenbus 10 an eine Steuereinheit 1 liefern. Ferner sind in den Gleichstromleitungen der Umrichter 7, 7' Stromsensoren 6, 6' angeordnet, die ihre Messwerte ebenfalls über den Datenbus 10 an die Steuereinheit 1 liefern. Die Gleichspannungszwischenkreise 9, 9' speisen im ersten Subnetz 17 zwei Umrichter zum Testen Batterien 15, und im zweiten Subnetz 17' einen Umrichter zum Betrieb einer elektrischen Maschine 16 zum Prüfen eines Antriebsprüflings 13. Diese Umrichter sind jedoch nicht mit der Steuereinheit 1 verbunden.

Die Steuereinheit 1 sorgt für die ausgewogene Balancierung zwischen den beiden Subnetzen 17, 17' indem sie den Umrichtern 7, 7' über den Datenbus 10 laufend zulässige Leistungsbereiche übermittelt. Gegebenenfalls kann die Steuereinheit 1 auch eine der beiden Entladungsvorrichtungen 8, 8' aktivieren, um die Spannung an den Zwischenkreisen 9, 9' zu reduzieren. Eine aktive Beeinflussung der Leistungen der Umrichter in den Subnetzen erfolgt in diesem Ausführungsbeispiel jedoch nicht.

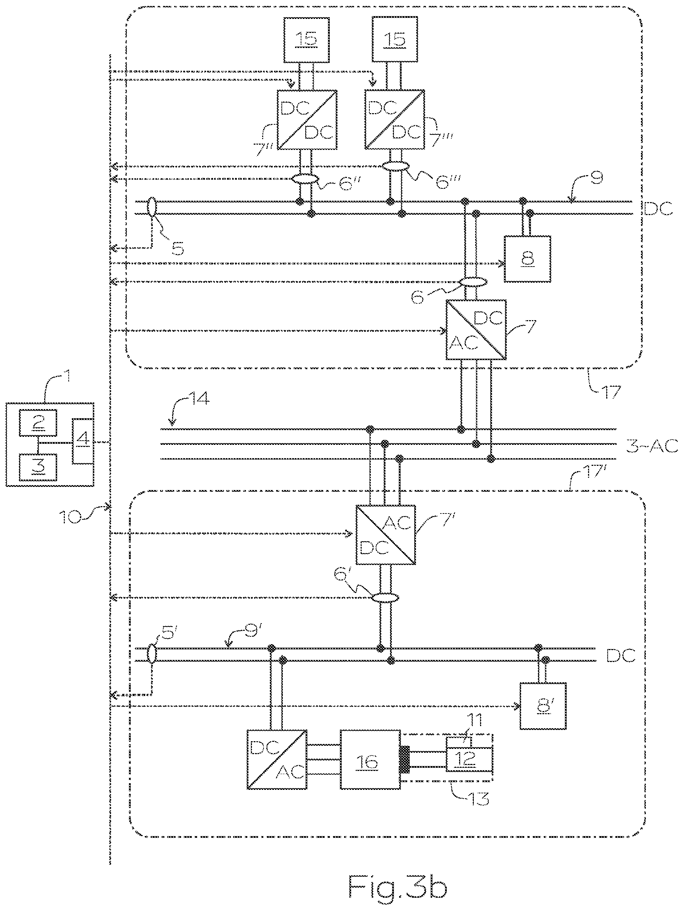

Fig. 3b zeigt eine direkte Weiterentwicklung des Ausführungsbeispiels gemäß Fig. 3a. In diesem Ausführungsbeispiel sind zusätzlich auch die beiden Umrichter 7", 7‴ des Subnetzes 17, welche die Batterien 15 prüfen, mit der Steuereinheit 1 über den Datenbus 10 verbunden. Somit kann die Steuereinheit 1 nicht nur die Leistungen der Subnetze 17, 17' gegenüber dem Zentralnetz 14 balancieren, sondern auch innerhalb des Subnetzes 17 die beiden Umrichter 7", 7‴ derart mit zulässigen Leistungsbereichen beaufschlagen, dass die Leistungsbilanz im Subnetz 17 innerhalb eines vorgegebenen Bereichs bleibt. Eine derartige Ausführung ist in der Praxis besonders vorteilhaft, da sie den Betrieb verschiedenster Prüfsystem an einem gemeinsamen Zentralnetz 14 erlaubt.

In weiteren, nicht dargestellten Ausführungsbeispielen ist nicht die Steuereinheit, sondern jeder Umrichter selbst mit internen oder externen Spannungssensoren zur Messung ihrer Ausgangsspannung und mit internen oder externen Stromsensoren zur Messung ihrer Ausgangsströme verbunden. Der Umrichter übermittelt diese Strom- und Spannungsmesswerte an die Steuereinheit, oder berechnet selbst seine aktuelle Leistungsbilanz und übermittelt diese an die Steuereinheit. Selbstverständlich sind auch Ausführungsbeispiele vorgesehen, bei denen manche der gesteuerten Umrichter ihre Leistungsbilanz selbst ermitteln, und andere der gesteuerten Umrichter ihre Leistungsbilanz nicht selbst ermitteln, sondern die Steuereinheit die Ermittlung der Leistungsbilanz dieser Umrichter übernimmt. Die Erfindung ist diesbezüglich nicht auf die oben beschriebenen Ausführungsbeispiele beschränkt.

Die Erfindung beschränkt sich jedoch nicht auf die vorliegenden Ausführungsbeispiele, sondern umfasst sämtliche Umrichteranordnungen und Verfahren zum Betrieb von Umrichteranordnungen im Rahmen der nachfolgenden Patentansprüche.

Hierin verwendete Begriffe wie Umrichter, Netzumrichter oder Maschinenumrichter sollen nicht zu eng ausgelegt werden. Unter einem erfindungsgemäßen Umrichter, sei es nun ein Maschinenumrichter oder ein Netzumrichter, kann jede gesteuerte elektrische und/oder elektronische Schaltung verstanden werden, die eine Gleichspannung in eine andere Gleichspannung oder Wechselspannung umwandelt, oder eine Wechselspannung in eine andere Wechselspannung oder Gleichspannung umwandelt. Bei einer derartigen Schaltung kann es sich beispielsweise, aber nicht ausschließlich, um einen Direktumrichter, einen Matrixumrichter, einen Wechselspannungswandler, einen Gleichspannungswandler, einen geschalteten Brückenwechselrichter, einen geschalteten Brückengleichrichter oder dergleichen handeln. Die konkrete schaltungstechnische Realisierung des Umrichters ist nicht wesentlich. Erfindungsgemäß vorgesehene Umrichter können auch eine interne galvanische Trennung vorsehen und können für hohe elektrische Leistungen vorgesehen sein, beispielsweise Leistungen im Bereich von 100 kW bei einer Gleichspannung von 850 V bzw. 300 kVA Wechselstromleistung.

### Bezugszeichenliste

- 1: Steuereinheit
- 2: Datenverarbeitungseinheit
- 3: Speichereinheit
- 4: Schnittstelleneinheit
- 5, 5': Spannungssensor
- 6, 6', 6", 6‴: Stromsensor
- 7, 7', 7", 7‴: Umrichter
- 8, 8': Entladungsvorrichtung
- 9, 9': Gleichspannungszwischenkreis
- 10: Datenbus
- 11: Antriebsaggregat
- 12: Getriebe
- 13: Antriebsprüfling
- 14: Zentralnetz
- 15, 15', 15", 15‴: Batterie
- 16, 16': Elektrische Maschine
- 17, 17': Subnetz

## Patentansprüche

1. **Umrichteranordnung** umfassend zumindest zwei Umrichter (7, 7') und eine mit den Umrichtern (7, 7') verbundene Steuereinheit (1), wobei die Steuereinheit (1) dazu ausgeführt ist, kontinuierlich oder in diskreten Zeitintervallen
- den Umrichtern (7, 7') ihren zulässigen elektrischen Leistungsbereich, insbesondere ihren minimalen Leistungswert Pₘᵢₙ und/oder ihren maximalen Leistungswert Pₘₐₓ, zu übermitteln,
- die aktuelle Leistungsbilanz der einzelnen Umrichter (7, 7') zu bestimmen oder von diesen entgegenzunehmen, und
- die Leistungsbilanz der gesamten Umrichteranordnung zu berechnen,
- den zulässigen elektrischen Leistungsbereich der Umrichter (7, 7') derart abzuändern, dass die Leistungsbilanz der gesamten Umrichteranordnung einen vorgegebenen Bereich nicht verlässt,
die Umrichteranordnung ist **dadurch gekennzeichnet, dass** die Steuereinheit dazu ausgeführt ist,
- den zulässigen elektrischen Leistungsbereich der Umrichter (7, 7') abzuändern, wenn die Spannung V_{DC} eines die Umrichter (7, 7') speisenden Gleichspannungszwischenkreises (9), unter einen vorgegebenen Schwellwert fällt oder einen vorgegebenen Schwellwert übersteigt.

2. **Umrichteranordnung** nach Anspruch 1, **dadurch gekennzeichnet, dass** die Steuereinheit (1) zur Bestimmung der aktuellen Leistungsbilanz der Umrichter (7, 7') mit zumindest einem Spannungssensor zur Messung der Eingangsspannung der Umrichter (7, 7') und mit Stromsensoren (6, 6') zur Messung der Eingangsströme der Umrichter (7, 7') verbunden ist.

3. **Umrichteranordnung** nach Anspruch 1 oder 2, **dadurch gekennzeichnet, dass** die Umrichter (7, 7') von einem Gleichspannungszwischenkreis (9) gespeist sind und die Steuereinheit mit einem Spannungssensor (5) zur Messung der Spannung V_{DC} am Gleichspannungszwischenkreis (9) verbunden ist.

4. **Umrichteranordnung** nach einem der Ansprüche 1 bis 3, **dadurch gekennzeichnet, dass** die Steuereinheit (1) zur Bestimmung der aktuellen Leistungsbilanz der Umrichter (7, 7') mit Spannungssensoren zur Messung der Ausgangsspannung der Umrichter (7, 7') und mit Stromsensoren zur Messung der Ausgangsströme der Umrichter (7, 7') verbunden ist.

5. **Umrichteranordnung** nach einem der Ansprüche 1 bis 4, **dadurch gekennzeichnet, dass** die Umrichter (7, 7') mit Spannungssensoren zur Messung ihrer Ausgangsspannung und mit Stromsensoren zur Messung ihrer Ausgangsströme verbunden sind, und zur Übermittlung der Messwerte an die Steuereinheit (1) ausgebildet sind.

6. **Umrichteranordnung** nach einem der Ansprüche 1 bis 5, **dadurch gekennzeichnet, dass** eine mit der Steuereinheit (1) verbundene Entladungsvorrichtung (8) zur Reduktion der Spannung an einem Gleichspannungszwischenkreis (9) vorgesehen ist, und die Steuereinheit (1) dazu ausgeführt ist, die Entladungsvorrichtung zu aktivieren, wenn die Spannung am Gleichspannungszwischenkreises (9) einen vorgegebenen Schwellwert übersteigt.

7. **Umrichteranordnung** nach einem der Ansprüche 1 bis 6, **dadurch gekennzeichnet, dass** die Umrichter (7, 7') als Active-Front-End-Umrichter mit bidirektionalem Leistungsfluss ausgeführt sind.

8. **Umrichteranordnung** nach Anspruch7, **dadurch gekennzeichnet, dass** die Umrichter (7, 7') als Maschinenumrichter in einem Antriebsprüfstand oder als DC-DC-Konverter in einem Batterieprüfstand eingesetzt sind.

9. **Umrichteranordnung** nach einem der Ansprüche 1 bis 8, **dadurch gekennzeichnet, dass** zumindest zwei der Umrichter (7, 7') als Netzumrichter, insbesondere AC-DC-Konverter, ausgebildet sind, die voneinander getrennte Subnetze (17, 17'), vorzugsweise in Form getrennter Gleichspannungszwischenkreise (9, 9'), aus einem Zentralnetz (14) speisen, wobei die Steuereinheit (1) dazu ausgeführt ist, den zulässigen elektrischen Leistungsbereich der Umrichter (7, 7') derart abzuändern, dass die Leistungsbilanz der Umrichter (7, 7') des Zentralnetzes (14) einen vorgegebenen Bereich nicht verlässt..

10. **Umrichteranordnung** nach Anspruch 9, **dadurch gekennzeichnet, dass** zumindest zwei weitere Umrichter (7", 7‴) in zumindest einem der Subnetze (17, 17') angeordnet sind, wobei die Steuereinheit (1) dazu ausgeführt ist, den zulässigen elektrischen Leistungsbereich der Umrichter (7", 7‴) derart abzuändern, dass die Leistungsbilanz der Umrichter (7", 7‴) jedes Subnetzes (17, 17') einen vorgegebenen Bereich nicht verlässt.

11. **Verfahren** zum Betrieb einer Umrichteranordnung mit zumindest zwei Umrichtern (7, 7') und einer mit den Umrichtern (7, 7') verbundenen Steuereinheit (1), umfassend die folgenden Schritte:
a. Übermittlung, durch die Steuereinheit (1), eines zulässigen elektrischen Leistungsbereichs an die Umrichter (7, 7'), insbesondere eines minimalen Leistungswerts Pₘᵢₙ und/oder eines maximalen Leistungswerts Pₘₐₓ,
b. Empfangen oder Berechnen, durch die Steuereinheit (1), der aktuellen Leistungsbilanz der einzelnen Umrichter (7, 7'),
c. Berechnen, durch die Steuereinheit (1), der Leistungsbilanz der gesamten Umrichteranordnung,
d. Adaptieren, durch die Steuereinheit (1), des zulässigen elektrischen Leistungsbereichs der Umrichter (7, 7') derart, dass die Leistungsbilanz der gesamten Umrichteranordnung einen vorgegebenen Bereich nicht verlässt, und wenn die Spannung V_{DC} eines die Umrichter (7, 7') speisenden Gleichspannungszwischenkreises (9) unter einen vorgegebenen Schwellwert fällt oder einen vorgegebenen Schwellwert übersteigt.

12. **Verfahren** nach Anspruch 11, **dadurch gekennzeichnet, dass** die Steuereinheit (1) zur Berechnung der aktuellen Leistungsbilanz der Umrichter (7, 7') die Eingangsspannung der Umrichter (7, 7') von zumindest einem Spannungssensor (5) und die Eingangsströme der Umrichter (7, 7') von Stromsensoren (6, 6') entgegennimmt.

13. **Verfahren** nach einem der Ansprüche 11 oder 12, **dadurch gekennzeichnet, dass** die Steuereinheit (1) die Spannung Voc eines Gleichspannungszwischenkreises (9) von einem Spannungssensor (5) entgegennimmt.

14. **Verfahren** nach einem der Ansprüche 11 bis 13, **dadurch gekennzeichnet, dass** die Steuereinheit (1) die Ausgangsspannungen der Umrichter (7, 7') von Spannungssensoren und die Ausgangsströme der Umrichter (7, 7') von Stromsensoren entgegennimmt.

15. **Verfahren** nach einem der Ansprüche 11 bis 14, **dadurch gekennzeichnet, dass** die Umrichter (7, 7') mit Spannungssensoren zur Messung ihrer Ausgangsspannung und mit Stromsensoren zur Messung ihrer Ausgangsströme verbunden sind, und die Messwerte an die Steuereinheit (1) übermitteln.

16. **Verfahren** nach einem der Ansprüche 11 bis 15, **dadurch gekennzeichnet, dass** die Steuereinheit (1) eine mit der Steuereinheit (1) verbundene Entladungsvorrichtung (8) zur Reduktion der Spannung an einem Gleichspannungszwischenkreis (9) aktiviert, wenn die Spannung am Gleichspannungszwischenkreises (9) einen vorgegebenen Schwellwert übersteigt.

17. **Verfahren** nach einem der Ansprüche 11 bis 16, **dadurch gekennzeichnet, dass** die Steuereinheit (1),
- den zulässigen elektrischen Leistungsbereich der Umrichter (7, 7') eines Zentralnetzes (14) derart abändert, dass die Leistungsbilanz der Umrichter (7, 7') des Zentralnetzes (14) einen vorgegebenen Bereich nicht verlässt, und
- den zulässigen elektrischen Leistungsbereich der Umrichter (7", 7‴) zumindest eines Subnetzes (17, 17') derart abändert, dass die Leistungsbilanz der Umrichter (7", 7‴) jedes Subnetzes (17, 17') einen vorgegebenen Bereich nicht verlässt.

18. **Computerlesbares Speichermedium** umfassend computerlesbare Anweisungen die eine elektronische Steuereinheit (1), beispielsweise einen Computer, einen Mikrocontroller oder einen Mikroprozessor, zur Ausführung eines Verfahrens nach einem der Ansprüche 11 bis 17 veranlassen.

## Claims

1. **Converter arrangement** comprising at least two converters (7, 7') and a control unit (1) connected to the converters (7, 7'), the control unit (1) being configured to continuously or at discrete time intervals
- transmit to the converters (7, 7') their permissible electrical power range, in particular their minimum power value Pₘᵢₙ and/or their maximum power value Pₘₐₓ,
- determine the current power balance of the individual converters (7, 7') or to receive it from them, and
- calculate the power balance of the entire converter arrangement,
- modify the permissible electrical power range of the converters (7, 7') such that the power balance of the entire converter arrangement does not leave a predetermined range,
wherein the converter arrangement is **characterized in that** the control unit is configured to modify the permissible electrical power range of the converters (7, 7') when the voltage V_{DC} of a DC link (9) supplying the converters (7, 7') falls below or exceeds a predetermined threshold value.

2. **Converter arrangement** according to claim 1, **characterized in that** the control unit (1) is connected to at least one voltage sensor for measuring the input voltage of the converters (7, 7') and to current sensors (6, 6') for measuring the input currents of the converters (7, 7') in order to determine the current power balance of the converters (7, 7').

3. **Converter arrangement** according to claim 1 or 2, **characterized in that** the converters (7, 7') are supplied by a DC link (9) and the control unit is connected to a voltage sensor (5) for measuring the voltage V_{DC} of the DC link (9).

4. **Converter arrangement** according to any of claims 1 to 3, **characterized in that** the control unit (1) is connected to voltage sensors for measuring the output voltage of the converters (7, 7') and to current sensors for measuring the output currents of the converters (7, 7') in order to determine the current power balance of the converters (7, 7').

5. **Converter arrangement** according to any of claims 1 to 4, **characterized in that** the converters (7, 7') are connected to voltage sensors for measuring their output voltage and to current sensors for measuring their output currents, and are configured to transmit the measurement values to the control unit (1).

6. **Converter arrangement** according to any of claims 1 to 5, **characterized in that** a discharge device (8) connected to the control unit (1) is provided to reduce the voltage of a DC link (9), and that the control unit (1) is configured to activate the discharge device when the voltage of the DC link (9) exceeds a predetermined threshold value.

7. **Converter arrangement** according to any of claims 1 to 6, **characterized in that** the converters (7, 7') are designed as active-front-end converters with bidirectional power flow.

8. **Converter arrangement** according to claim 7, **characterized in that** the converters (7, 7') are used as machine converters in a drivetrain test bench or as DC-DC converters in a battery test bench.

9. **Converter arrangement** according to any of claims 1 to 8, **characterized in that** at least two of the converters (7, 7') are designed as grid converters, in particular AC-DC converters, which supply separate sub-networks (17, 17'), preferably in the form of separate DC links (9, 9'), from a central grid (14), the control unit (1) being configured to modify the permissible electrical power range of the converters (7, 7') such that the power balance of the converters (7, 7') of the central grid (14) does not leave a predetermined range.

10. **Converter arrangement** according to claim 9, **characterized in that** at least two additional converters (7", 7‴) are arranged in at least one of the sub-networks (17, 17'), the control unit (1) being configured to modify the permissible electrical power range of the converters (7", 7‴) such that the power balance of the converters (7", 7‴) of each sub-network (17, 17') does not leave a predetermined range.

11. **Method** for operating a converter arrangement with at least two converters (7, 7') and a control unit (1) connected to the converters (7, 7'), comprising the following steps:
a. transmitting, by the control unit (1), a permissible electrical power range to the converters (7, 7'), in particular a minimum power value Pₘᵢₙ and/or a maximum power value Pₘₐₓ,
b. receiving or calculating, by the control unit (1), the current power balance of the individual converters (7, 7'),
c. calculating, by the control unit (1), the power balance of the entire converter arrangement,
d. adapting, by the control unit (1), the permissible electrical power range of the converters (7, 7') such that the power balance of the entire converter arrangement does not leave a predetermined range,
and when the voltage V_{DC} of a DC link (9) supplying the converters (7, 7') falls below or exceeds a predetermined threshold value.

12. **Method** according to claim 11, **characterized in that** the control unit (1) receives the input voltage of the converters (7, 7') from at least one voltage sensor (5) and the input currents of the converters (7, 7') from current sensors (6, 6') to calculate the current power balance of the converters (7, 7').

13. **Method** according to any of claims 11 or 12, **characterized in that** the control unit (1) receives the voltage V_{DC} of the DC link (9) from a voltage sensor (5).

14. **Method** according to any of claims 11 to 13, **characterized in that** the control unit (1) receives the output voltages of the converters (7, 7') from voltage sensors and the output currents of the converters (7, 7') from current sensors.

15. **Method** according to any of claims 11 to 14, **characterized in that** the converters (7, 7') are connected to voltage sensors for measuring their output voltage and to current sensors for measuring their output currents, and transmit the measurement values to the control unit (1).

16. **Method** according to any of claims 11 to 15, **characterized in that** the control unit (1) activates a discharge device (8) connected to the control unit (1) to reduce the voltage of a DC link (9) when the voltage of the DC link (9) exceeds a predetermined threshold value.

17. **Method** according to any of claims 11 to 16, **characterized in that** the control unit (1)
- modifies the permissible electrical power range of the converters (7, 7') of a central grid (14) such that the power balance of the converters (7, 7') of the central grid (14) does not leave a predetermined range, and
- modifies the permissible electrical power range of the converters (7", 7‴) of at least one sub-network (17, 17') such that the power balance of the converters (7", 7‴) of each sub-network (17, 17') does not leave a predetermined range.

18. **Computer-readable storage medium** comprising computer-readable instructions that cause an electronic control unit (1), for example a computer, a micro-controller, or a microprocessor, to carry out a method according to any of claims 11 to 17.

## Revendications

1. Agencement de convertisseurs comprenant au moins deux convertisseurs (7, 7') et une unité de commande (1) reliée aux convertisseurs (7, 7'), l'unité de commande (1) étant configurée pour, de manière continue ou à intervalles de temps discrets:
- transmettre aux convertisseurs (7, 7') leur plage de puissance électrique admissible, en particulier leur valeur minimale de puissance Pmin et/ou leur valeur maximale de puissance Pmax,
- déterminer le bilan de puissance actuel des convertisseurs individuels (7, 7') ou le recevoir de ceux-ci,
- calculer le bilan de puissance de l'ensemble de l'agencement de convertisseurs,
- modifier la plage de puissance électrique admissible des convertisseurs (7, 7') de manière que le bilan de puissance de l'ensemble de l'agencement de convertisseurs ne sorte pas d'une plage prédéterminée,
l'agencement de convertisseurs étant **caractérisé en ce que** l'unité de commande est configurée pour
- modifier la plage de puissance électrique admissible des convertisseurs (7, 7') lorsque la tension Voc d'un circuit intermédiaire à courant continu (9) alimentant les convertisseurs (7, 7') descend en dessous d'une valeur seuil prédéterminée ou dépasse une valeur seuil prédéterminée.

2. Agencement de convertisseurs selon la revendication 1, **caractérisé en ce que** l'unité de commande (1) est reliée à au moins un capteur de tension destiné à mesurer la tension d'entrée des convertisseurs (7, 7') et à des capteurs de courant (6, 6') destinés à mesurer les courants d'entrée des convertisseurs (7, 7'), afin de déterminer le bilan de puissance actuel des convertisseurs (7, 7').

3. Agencement de convertisseurs selon l'une des revendications 1 ou 2, **caractérisé en ce que** les convertisseurs (7, 7') sont alimentés par un circuit intermédiaire à courant continu (9) et l'unité de commande est reliée à un capteur de tension (5) destiné à mesurer la tension Voc du circuit intermédiaire (9).

4. Agencement de convertisseurs selon l'une quelconque des revendications 1 à 3, **caractérisé en ce que** l'unité de commande (1) est reliée à des capteurs de tension destinés à mesurer la tension de sortie des convertisseurs (7, 7') et à des capteurs de courant destinés à mesurer les courants de sortie des convertisseurs (7, 7') afin de déterminer le bilan de puissance actuel des convertisseurs (7, 7').

5. Agencement de convertisseurs selon l'une quelconque des revendications 1 à 4, **caractérisé en ce que** les convertisseurs (7, 7') sont reliés à des capteurs de tension pour la mesure de leur tension de sortie et à des capteurs de courant pour la mesure de leurs courants de sortie, et sont configurés pour transmettre les valeurs mesurées à l'unité de commande (1).

6. Agencement de convertisseurs selon l'une quelconque des revendications 1 à 5, **caractérisé en ce qu'**un dispositif de décharge (8) relié à l'unité de commande (1) est prévu pour réduire la tension d'un circuit intermédiaire à courant continu (9), et **en ce que** l'unité de commande (1) est configurée pour activer le dispositif de décharge lorsque la tension du circuit intermédiaire (9) dépasse une valeur seuil prédéterminée.

7. Agencement de convertisseurs selon l'une quelconque des revendications 1 à 6, **caractérisé en ce que** les convertisseurs (7, 7') sont exécutés en tant que convertisseurs Active Front End à flux de puissance bidirectionnel.

8. Agencement de convertisseurs selon la revendication 7, **caractérisé en ce que** les convertisseurs (7, 7') sont utilisés comme convertisseurs de machine dans un banc d'essai d'entraînement ou comme convertisseurs CC-CC dans un banc d'essai de batterie.

9. Agencement de convertisseurs selon l'une quelconque des revendications 1 à 8, **caractérisé en ce qu'**au moins deux des convertisseurs (7, 7') sont conçus comme convertisseurs réseau, en particulier comme convertisseurs AC-DC, alimentant des sous-réseaux séparés (17, 17'), de préférence sous forme de circuits intermédiaires à courant continu séparés (9, 9'), à partir d'un réseau central (14), l'unité de commande (1) étant configurée pour modifier la plage de puissance électrique admissible des convertisseurs (7, 7') de manière que le bilan de puissance des convertisseurs (7, 7') du réseau central (14) ne sorte pas d'une plage prédéterminée.

10. Agencement de convertisseurs selon la revendication 9, **caractérisé en ce qu'**au moins deux autres convertisseurs (7", 7‴) sont disposés dans au moins un des sous-réseaux (17, 17'), l'unité de commande (1) étant configurée pour modifier la plage de puissance électrique admissible des convertisseurs (7", 7‴) de manière que le bilan de puissance des convertisseurs (7", 7‴) de chaque sous-réseau (17, 17') ne sorte pas d'une plage prédéterminée.

11. Procédé de fonctionnement d'un agencement de convertisseurs comprenant au moins deux convertisseurs (7, 7') et une unité de commande (1) reliée aux convertisseurs (7, 7'), comprenant les étapes suivantes :
a. transmission, par l'unité de commande (1), d'une plage de puissance électrique admissible aux convertisseurs (7, 7'), en particulier d'une puissance minimale Pmin et/ou d'une puissance maximale Pmax,
b. réception ou calcul, par l'unité de commande (1), du bilan de puissance actuel des convertisseurs individuels (7, 7'),
c. calcul, par l'unité de commande (1), du bilan de puissance de l'ensemble de l'agencement de convertisseurs,
d. adaptation, par l'unité de commande (1), de la plage de puissance électrique admissible des convertisseurs (7, 7') de manière que le bilan de puissance de l'ensemble de l'agencement de convertisseurs ne sorte pas d'une plage prédéterminée,
et lorsque la tension Voc d'un circuit intermédiaire (9) alimentant les convertisseurs (7, 7') descend en dessous ou dépasse une valeur seuil prédéterminée.

12. Procédé selon la revendication 11, **caractérisé en ce que** l'unité de commande (1) reçoit la tension d'entrée des convertisseurs (7, 7') à partir d'au moins un capteur de tension (5) et les courants d'entrée des convertisseurs (7, 7') à partir de capteurs de courant (6, 6') pour calculer le bilan de puissance actuel.

13. Procédé selon l'une des revendications 11 ou 12, **caractérisé en ce que** l'unité de commande (1) reçoit la tension Voc d'un circuit intermédiaire (9) à partir d'un capteur de tension (5).

14. Procédé selon l'une des revendications 11 à 13, **caractérisé en ce que** l'unité de commande (1) reçoit les tensions de sortie des convertisseurs (7, 7') à partir de capteurs de tension et les courants de sortie des convertisseurs (7, 7') à partir de capteurs de courant.

15. Procédé selon l'une des revendications 11 à 14, **caractérisé en ce que** les convertisseurs (7, 7') sont reliés à des capteurs de tension pour mesurer leur tension de sortie et à des capteurs de courant pour mesurer leurs courants de sortie, et transmettent les valeurs mesurées à l'unité de commande (1).

16. Procédé selon l'une des revendications 11 à 15, **caractérisé en ce que** l'unité de commande (1) active un dispositif de décharge (8) relié à l'unité de commande (1) pour réduire la tension d'un circuit intermédiaire à courant continu (9) lorsque la tension du circuit intermédiaire (9) dépasse une valeur seuil prédéterminée.

17. Procédé selon l'une des revendications 11 à 16, **caractérisé en ce que** l'unité de commande (1) :
- modifie la plage de puissance électrique admissible des convertisseurs (7, 7') d'un réseau central (14) de manière que le bilan de puissance des convertisseurs (7, 7') du réseau central (14) ne sorte pas d'une plage prédéterminée, et
- modifie la plage de puissance électrique admissible des convertisseurs (7", 7‴) d'au moins un sous-réseau (17, 17') de manière que le bilan de puissance des convertisseurs (7", 7‴) de chaque sous-réseau (17, 17') ne sorte pas d'une plage prédéterminée.

18. Support d'enregistrement lisible par ordinateur comprenant des instructions lisibles par ordinateur qui amènent une unité de commande électronique (1), par exemple un ordinateur, un microcontrôleur ou un microprocesseur, à exécuter un procédé selon l'une des revendications 11 à 17.
